# EUROPEAN PATENT APPLICATION

(11) **EP 1 051 921 A1**
(43) Date of publication of application: **15.11.2000**
(21) Application number: 99109562.1
(22) Date of filing: 14.05.1999
(51) Int. Cl.: A23P 1/02, B01J 2/12, B01J 2/14

(54) **Process for the production of cereal granules for porridges**

(71) Applicant: SOCIETE DES PRODUITS NESTLE S.A., 1800 Vevey (CH)
(72) Inventor: Jegede, Oyelayo, New Milford, CT 06776 (US)
(74) Representative: Micheli & Cie

(57) **Abstract**

The invention relates to a process for the production of cereal granules for porridges, which comprises feeding cereal flour onto the bottom surface of a rotating, inclined pan, spraying water on said surface until granules are formed of a predetermined mean particle size of 1 to 4mm ⌀ and drying the granules formed in a fluidised bed drier, the cereal flour being selected from that of maize, millet, wheat, sorghum, rice and fonio.

## Description

The present invention relates to a process for the production of cereal granules for porridges, as well as to the granules obtained and to an apparatus for carrying out this process.

The term porridge (or gruel) could be defined as meals prepared by boiling starchy extracts, flour or granules of cereals to gelatinisation in water. The consistency, which vary from thick set to liquid depends heavily on the quantity of water added and its form of consumption.

The availability of cereals, for example pearl millet, sorghum, maize, rice, wheat, fonio, etc., and their adaptability to local climatic conditions, intensified its usage within the different communities. Cereals, such as millet, sorghum, maize, rice, fonio, etc. are staple foods for millions of people and represents a major source of energy and protein to the people in tropical Africa where their cultivation is mostly not limited by climate.

In most parts of Africa, numerous dishes are prepared from cereals in the porridges form which are consumed as breakfast, lunch or dinner. Sometimes they differ from region to region, but the primary processing methods are mostly similar.

The high carbohydrate content of cereals contributes to its high consumption, which provides the necessary calories requirement for the population. In addition, to this importance, the strong position of porridge is emphasised in the African diet by the high yield per volume of cereals in comparison to that of other food crops such as tuber and stems like yam and cassava, within the continent.

The huge diversities in the type of porridge consumption that exists within and between Africa sub continents and countries respectively are as much as the differences in cultures and traditions.

Granulated porridges are consumed mainly in the Sahelian region, while gritty porridges are consumed in the Southern parts of Africa. However, with the migration of people, the world is getting smaller and food habits are becoming highly interactive.

Porridge texture varies depending on raw material from smooth (from fine flour / slurry) to gritty (from grits) and to granulated (from size enlargement processes). Some of these porridges are consumed as savoury (with sauces) but mostly as sweet dishes.

Granulated porridges are made from all finely ground degermed cereal grains or composite of these. The process as performed in the Sahelian region is manual and involves grain cleaning, dehulling, milling and granulating. Cleaning is done by winnowing the grains in flat palm frond trays. The cleaned grains are then degermed and milled using the traditional wooden mortar and pestle or in a mechanical hammer mill.

Among the types of raw material used, millet, maize and rice are the most common ones, whereas medium to thick porridges are mostly preferred. Generally, flavours are added, like spices (ginger) and fruit juices (lemon), preferably during cooking, but the vaste majority of porridges are sweet, i.e. containing sweet flavours such as vanilla, nutmeg, orange blossom, etc., which are added after cooking just before consumption.

Upto now, flour obtained from milling is manually granulated by gradually mixing with water. The granules thus produced are cooked in water for porridges and consumed on the same day.

However, with the modernisation of the African society, there is presently a strong wish for a ready to cook product, in the form of granules, and more particularly of flavoured granules, which can be stored and simply cooked in water for consumption, and therefore for a granulation process or more precisely for a size enlargement process.

Industrial processes are already known for the granulation of food products, such as that disclosed by the same owner in EP-A-0223963 and involving a rotary drum, but which have been shown practically not being appropriate for obtaining the intended flavoured cereals granules.

The purpose of the present invention is thus to provide a suitable, cost effective process for the production of uniform cereal granules for porridges, that does not disintegrate after cooking, as well as an apparatus for carrying out said process.

The above purpose is reached by the process, object of the present invention, which comprises feeding cereal flour onto the bottom surface of a rotating, inclined pan, spraying water on said surface until granules are formed of a predetermined mean particle size and drying the granules formed in a fluidised bed drier.

A second object of this invention is constituted by the cereal granules for porridges obtained by the above process, whereas a third object of the present invention is consisting in an apparatus for carrying out said process, and which comprises a rotating pan having a bottom surface which can be inclined, means for feeding cereal flour onto said surface and means for spraying water on it, as well as a fluidised bed drier.

According to a preferred embodiment of the present invention for the production of flavoured cereal granules, powder flavours can be mixed with the cereal flour before granulation or liquid flavours can be added to the granulation water to be sprayed. Generally citric acid is added to fruit flavours so as to boost the note.

Obviously, all the processing parameters are to be adjusted in order to obtain mean granule size range of 1 to 4 mm diameter, but preferably 2-3 mm (with specific weight range between 500 and 700 g/l after granulation). The identified most influencing parameters are on one part the type and mean particle size of the raw material used, i.e. the cereal flour, and on the other part the rotation speed and tilt angle of the inclined rotating pan involved in the process.

Granulation, within the context of this invention, is a process whereby cereal flour is agglomerated or cohered with the aid of pulverised water in a rotating, inclined open pan. This is done by feeding flour from the left top side of the pan and water or flavoured water is pulverised from the front of the pan onto the tumbling flour. Water as the agglomerating liquid provide the needed mechanical strength within the granules by mixing with the starch in the cereal flour.

The granule structure is determined by two following properties :
- the packing characteristics of the flour, which is related to the distribution particle size (flour with higher distribution range and smaller particle size range give better granule formation with relatively small size range), and ;
- the action of the cohesive forces which are present when the flour is moist; this is strongly related to the type of cereal (vitreous or floury), floury type being more cohesive than the vitreous type.

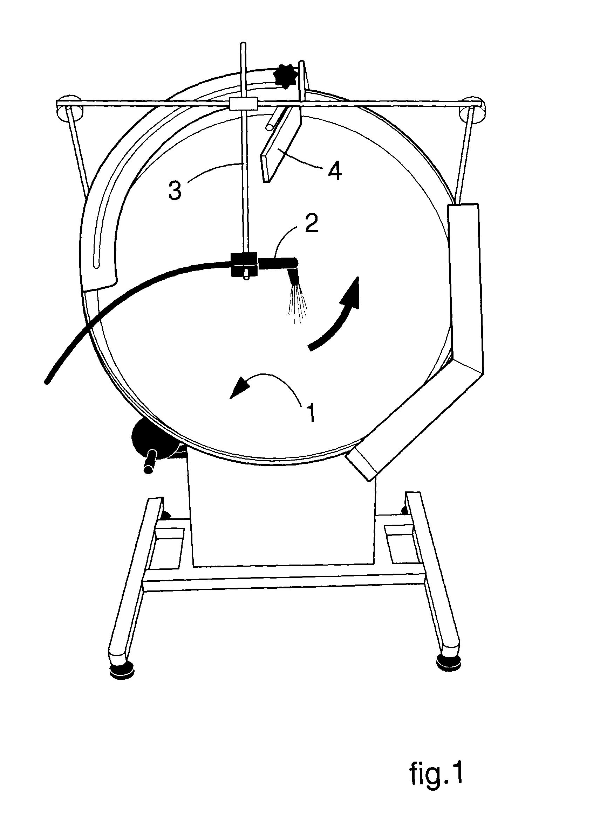

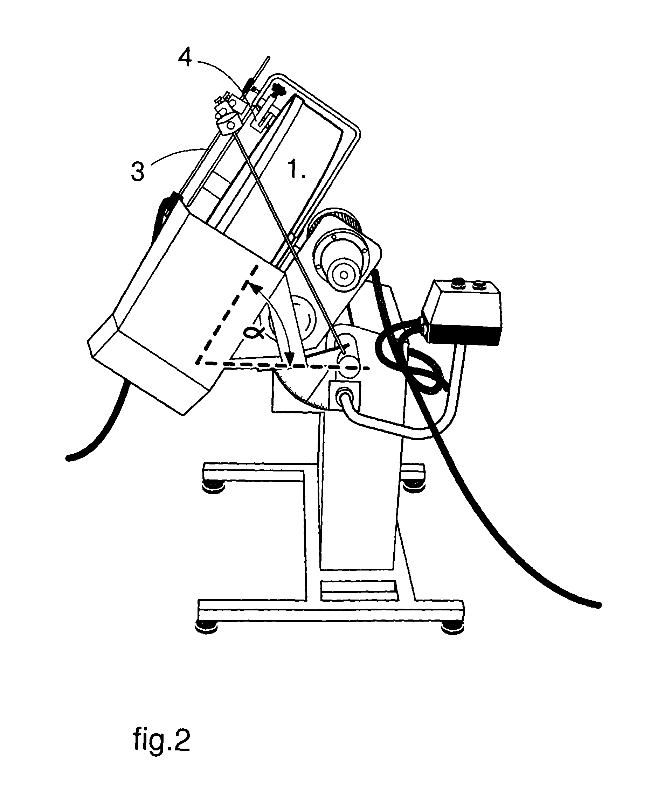

The present invention will now be described in more details by way of Example and in reference to the annexed drawing, in which Figures 1 and 2 schematically illustrate an element of the apparatus for carrying out the process claimed, more particularly the granulating disc or pan, respectively the front view and the side view thereof.

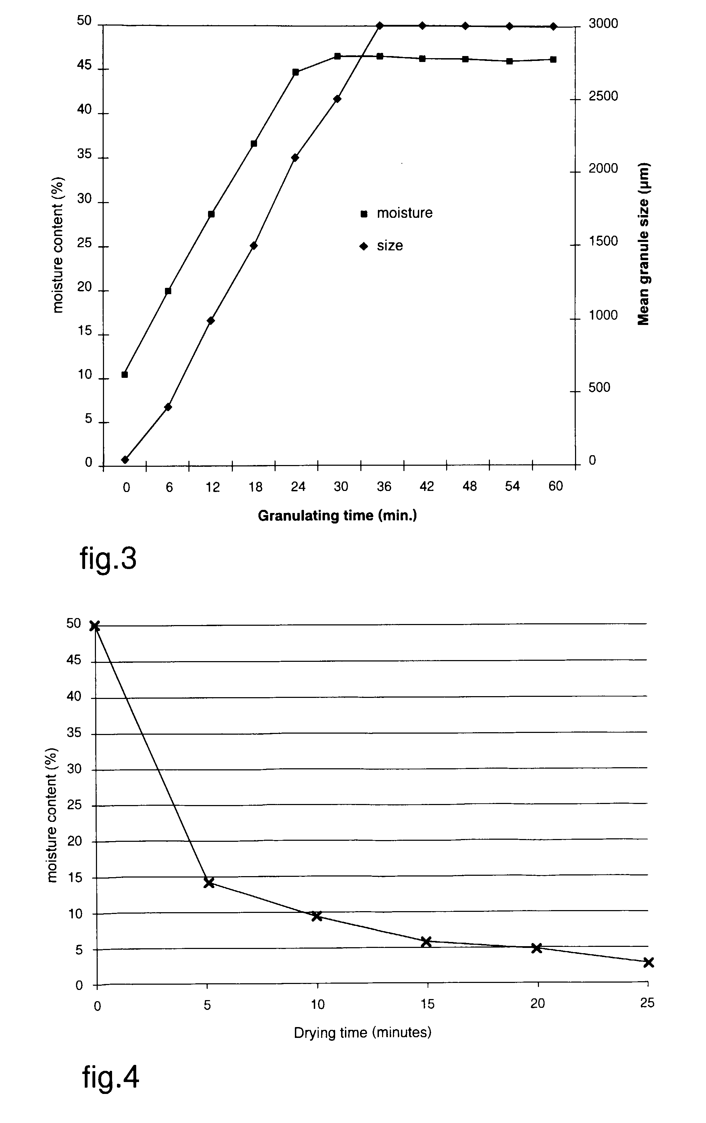

Figures 3 and 4 are representing graphics of the granule growth as a function of flour water uptake with time, respectively the granule moisture content as a function of the drying time.

The basic principle of the process is the formation of granules by circular movement of cereal flour sprayed with water in an inclined pan. Dry powder flavours were optionally mixed with cereal flour at a moisture content between 8 and 10 percent. The flour is fed at an hourly rate of 30 kilograms into a rotating inclined stainless steel pan. After five minutes of feeding, pulverised water or water with flavours in liquid form at 1 bar flow through a Ø 0.8 mm nozzle onto the flour in the pan. Uniform spherical granules containing 45 to 50 percent water continuously formed after about twelve minutes of pan rotation are transferred to a drier.

The granules formed are dried to the original moisture content of the flour and screened for size differentiation. To eliminate the screening after drying, a sieve (Ø 3.5 mm) could be placed below the granulating pan. Uniform-sized granules are filled into sachets and packed into cartons for distribution.

For the reconstitution before consumption, 30 grams of dry flavoured granules is weighed with 20 grams of sugar and boiled to gelatinisation in 350 ml of water for 8 to 12 minutes for maize and millet granules respectively for a medium-thick porridge.

The apparatus of the present invention comprises several separate parts, including means for milling and dosing the raw material, optionally for mixing it with powder flavours, for flour and water (or water and flavours) feeding, for granulating, for drying (fluid-bed drier) the granules obtained, sieving and finally packaging them.

The most important parts of the above apparatus is the one which is carrying out the flour and water feeding and the granulations step.

A GERICKE GLD 86 feed unit was used for flour feeding. The unit fitted with a speed control range of 0 to 100%, consists of a feed hopper with a screw conveyor. The unit capacity hourly feed rate is between 3.75 and 31 kilograms. Aged or high moisture content cereal flour have reduced feed rates. The flour feed unit is placed halfway to the top of the inclined pan 1 for the trials. However, this could be changed depending on equipment type.

Water or water mixed with liquid flavours is pulverised using a 0.8 mm spray nozzle 2 connected to a tubing of 9.6 mm attached to a Watson-Marlow 701 S/R peristaltic pump. It has a speed control range of 2 to 100 percent of the rated maximum speed (360 rpm at the rotor). To prevent accidental speed changes which chould disrupt the granulation process, the speed setting has a locking knob. This pump was optimised at 4% (hourly rate of 15 kg) for the granulation trials. Water spray nozzles are placed at 28 cm from the side of the pan and 15 cm from the front of the pan. Water pressure is at 1 bar.

Both water and flour feed rates depend absolutely on the diameter of the granulating disc or pan 1.

The stainless steel open pan 1 with an inner diameter 80 cm and a depth of 15 cm on a vertical inclined axis. This vertical axis is equipped with an angle range to measure the tilt a which varies from 20 to 50 degrees, while the speed of the pan is estimated by the number of pan revolutions per minutes (rpm).

In front of the pan, there is a metal frame 3 which serves as the support for water and air spray nozzles 2.

Inside the pan is a Teflon™ scrapper 4 attached to the frame 3 of the pan 1 at the top middle section. The function of the scrapper is to direct the tumbling pan load toward the water path and later toward the incoming flour. The scrapper position is changeable. However pan parameters change with an increase in either the depth or diameter. The position of the scrapper has a strong influence on the pan load movement. If placed at just 10 minutes to the hour, a huge lump of flour/water is formed at the center of the pan. Placement at the middle top section of the pan encouraged a better granulation process. When placed at 5 or 10 minutes to the hour, the pan load cycle was not completed. This resulted in the formation of non uniform granules.

The first stages of granulation is the feeding of flour into the rotating pan. After an adequate 5 minutes feed at a rate of 20 kg/hr is in the pan, the pulverisation of water starts and granulation commences. Flour water uptake with continuous motion at the selected angle of tilt results in granule formation.

The scrapper 4 aids the fall of the pan load. After approximatively 12 minutes, granules segregation occurs, with larger ones falling off at an average hourly rate of 60 to 100 kg.

With the load rotating aroung three quarters of the pan, covering an area of 225m² per minute, granules of uniform size appear after 360 pan revolutions (depending on flour physico-chemical composition).

Experimental and optimization tests have been made in the above-described conditions, which have shown that in order to obtain the aimed mean granule size formed of 2-3 mm diameter, the mean flour particle size should be of 0.1 to 0.2 mm, the tilt angle of the 80 cm diameter pan of 35-38 degrees and the rotary speed thereof of 35-38 rpm.

It should however be said that the above results have been obtained for two particular types of cereals, as raw material, i.e. white maize flour from Ivory Coast and millet flour from Senegal (SOUNA 3). The results could obviously differ from the ones mentioned above with other types of cereals having different specifications.

One should also consider as a parameter of the formation of cereal granules according to the process of the present invention, i.e. the rate of growth, which mainly depends on the flour water uptake.

As water is sprayed onto the tumbling flour, granulation starts. With each passing minute, there is flour water uptake; this however is determined by the type of cereal grain endosperm, floury endosperm having a higher water uptake than vitreous endosperm.

For understanding the granulation mechanism, it is necessary to consider the forces formed by the binding of flour using water. However, the rate of uptake flattens out, as illustrated in Figure 3, after the granules have reached a critical point. This point is betwen 40 and 50% moisture. At this point there is a pronounced size segregation due to centrifugal force in the pan with granules between Ø 2-3 mm falling out of the pan.

Fully formed granules at - 3mmØ stay at the bottom of the pan and fall off, while smaller granules continue revolving around the pan until size is achieved.

With high pan load moisture content, the rate of growth in the pan becomes excessive, and the granules are weaker and tend to collapse easily. Pan load sticks to the sides of the pan and do not tumble nor fall off. There is also a tendency to form bowling bottle-like granules, that is, a smaller granule on top of a larger one. On the other hand, when the pan load moisture content is below the critical point, it tumbles without any pattern any the pan tend to empty itself.

Absorption capacity ratio of the various cereal flour types is a further parameter to be taken into consideration. It has been shown that water absorption capacity ratio results of maize flour types highly correlated with flour behaviour in the granulation pan. Floury types of flour have significantly higher water absorption capacity ratio and thus gave better granulation results.

With regards to the drying operation following that of the granulation, it is important that the granules are fluidized, which prevents product scorching and results in a more even drying.

As an example, a fluidized bed drier COMESSA (of the Type LFV 0.3) can be used. With an entry temperature set between 90 and 110°C, but preferably at about 100°C, the granules are adequately dried without scorching nor thermoplasticity.

As shown on the annexed Figure 4, the first five minutes is the most significant period of the overall drying process. After 10 to 15 minutes of drying, the granules are at the original moisture content of the flour. A prolonged drying period resulted in weak disintegrated granules after cooking.

In the fluidised bed drier, residence time is mostly determined by the angle of inclinaison of the bed and the level valve opening. Partial opening of the valve close to the product exit retained the product in the drier for a longer time.

Orientative results in batch units and on a continuous basis showed a hourly drying rate of 52 kg for wet granules between 2 and 3 mm diameter. However, drying was carried out immediately after the granulation step, in order to avoid increased moisture uptake that might lead to product sticking to the feed hopper plate.

In summary, wet granule drying must be carried out immediately after the granulation process. Stickiness occurs when wet granules are held over a period of more than 30 minutes at room temperature. The fluidisation of the granules during drying prevents lumpiness, and it is considered as the most suitable method. Finally, there were no noticeable added-flavour loss after drying.

After granulation and drying, the cereal granules can be packaged for storage by using existing equipment for other kinds of food products.

Flavoured cereal granules recipes are described in the Table of the next page.

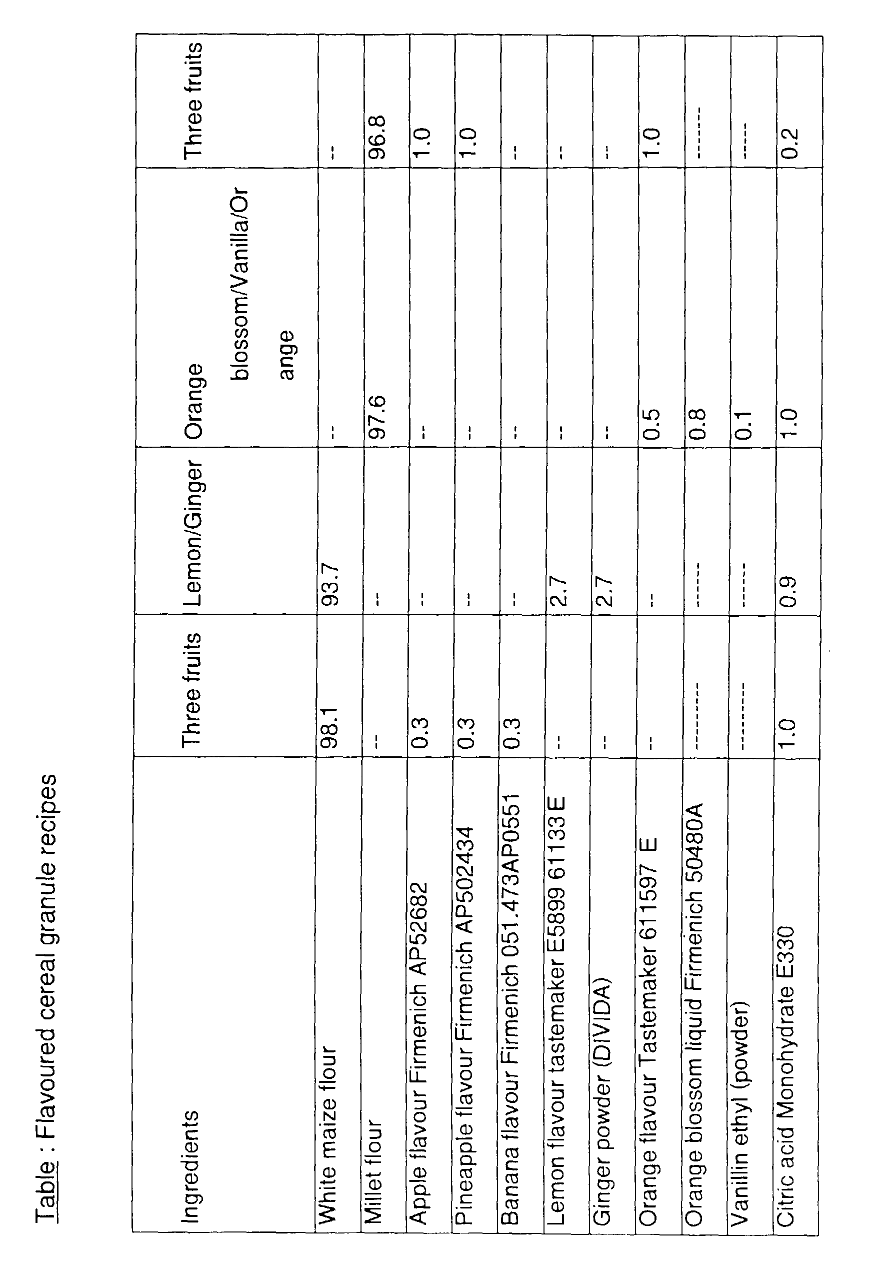

Furthermore, a panel of selected and trained tasters have evaluated the porridges made with cereal flavoured granules obtained by the process according to the present invention, more particularly the ones corresponding to the four recipes mentioned in the preceeding Table.

The tasters did not find significant differences among the sensory properties of the various samples at different temperatures over a period of maximum 15 months. This fulfilled the request for a product with a shelf life of 9 to 12 months from the prime mover markets. It has thus been shown that the granules can be kept for a minimum 12 months at 30°C without any degradation nor significant flavour loss and product change.

Shelf like studies were also carried out on the different white maize flour and millet flour used for the granulation trials, which showed no significant differences in sensory properties.

## Claims

1. Process for the production of cereal granules for porridges, which comprises feeding cereal flour onto the bottom surface of a rotating, inclined pan, spraying water on said surface until granules are formed of a predetermined mean particle size and drying the granules formed in a fluidised bed drier.

2. Process according to claim 1, in which the cereal flour is selected from that of maize, millet, wheat, sorghum, rice and fonio.

3. Process according to claim 2, in which the flour has a mean particle size in the range of 0.1 to 0.2 mm and contains from 8 to 10% moisture.

4. Process according to one of claims 1 to 3, in which the predetermined means particle size of the granules to be formed is of 1 to 4mm, preferably of 2-3 mm, and the specific weight thereof (dry state) being of 500 to 700 g/l.

5. Process according to one of claims 1 to 4, in which the tilt angle of the pan bottom surface is in the range of 35 to 38°, and the rotation speed of said pan is in the range of 35 to 38 rpm.

6. Process according to one of claims 1 to 5, in which the drying step is carried out at a temperature between 90 and 110°C, preferably at about 100°C.

7. Process according to one of claims 1 to 6 for the production of flavoured granules for porridges, in which powder flavours are added to the flour before the granulation step or liquid flavours are mixed with the water to be sprayed during said granulation step.

8. Cereal granules for porridges obtained by the process according to one of claims 1 to 6.

9. Flavoured cereal granules for porridges obtained by the process according to claim 7.

10. Apparatus for carrying out the process according to one of claims 1 to 7, which comprises a rotating pan having a bottom surface which can be inclined, means for feeding cereal flour onto said surface and means for spraying water on it, as well as a fluidised bed drier.
